# EUROPEAN PATENT APPLICATION

(11) **EP 4 811 254 A1**
(43) Date of publication of application: **23.09.2026**
(21) Application number: 25179635.5
(22) Date of filing: 29.05.2025
(51) Int. Cl.: G06Q 20/38, H04L 9/08

(54) **A PRIVATE KEY SECURITY MANAGEMENT METHOD OF A COLD WALLET AND A COLD WALLET SERVER THEREOF**

(30) Priority: 17.03.2025 HK 22025104825
(71) Applicant: MB-Vision Limited, North Point (HK)
(72) Inventor: GAO, LIXIN, NORTH POINT (HK)
(74) Representative: Chung, Hoi Kan

(57) **Abstract**

A private key security management method of a cold wallet and a cold wallet server thereof, the user provides a mnemonic to generate a private key and a wallet address, and then the system stores the private key fragments in volatile storage devices at different storage addresses, such as RAM. Even if the cold wallet server is hacked and causes data leakage of the RAM, but will not cause the entire private key information leakage, that is, the hacker can only obtain part of the private key fragments, and cannot piece together the complete private key to control the cold wallet assets, which greatly reduces the overall private key leakage risk caused by local security issues. Furthermore, if the cold wallet server detects an illegal intrusion, it will initiate a system restart or power-off protection measure. Once the system restarts or cut off power, the private key fragments stored in the RM will also disappear, further improving the security and reliability of key protection.

## Description

### FIELD OF THE INVENTION

The present invention relates to a method for managing private keys of a cold wallet, specifically a private key security management method of the cold wallet and a cold wallet server.

### BACKGROUND OF THE INVENTION

A private key is a unique credential for users to access and control their virtual currency wallets. In virtual currency transactions, the private key is used to digitally sign transactions, and the digital signature can prove the identity of the transaction initiator as well as the authenticity and integrity of the transaction. Since virtual currency transactions are conducted through the blockchain network, the private key forms an important basis for verifying the legitimacy of transactions. If the private key is leaked, hackers can impersonate the user to conduct transactions and transfer the user's virtual currency, resulting in the loss of user assets. The private key is usually stored in the user's electronic wallets, which are typically classified as hot wallets and cold wallets.

Hot wallet stores private keys on internet-connected devices, such as mobile phones and computers, and manages private keys with the help of software programs. It remains constantly interactive with the internet, making it extremely convenient to use. Users can operate virtual currency anytime and anywhere through connected devices, performing operations like transfers and balance inquiries, as conveniently as using online banking. However, because hot wallets rely on internet-connected devices to operate, malicious software can easily invade and obtain private keys. Once successfully acquired, hackers can easily transfer the virtual currency assets from the user's wallet, leading to severe financial losses for the user.

Cold wallet primarily stores private keys on offline devices, such as dedicated hardware wallets, tailor-made USB storage devices, or paper wallets. However, with the development of technology in recent years, cold wallet employing one-way communication technology have broken the traditional communication model between cold wallet and the outside world. It utilizes the unidirectional transmission characteristic of the physical layer to achieve data transmission outwards from the cold wallet, while external data cannot flow back into the cold wallet. Nevertheless, one-way communication technology is not entirely reliable. While one-way communication can prevent external data from entering the cold wallet, malicious software might intercept data on the transmission path when the cold wallet transmits data outwardly, attempting to analyze and obtain private key related information, thereby introducing the risk of private key leakage. Therefore, corresponding encryption technology is still needed for the cold wallet server located in the internal network of the cold wallet to further enhance the reliability and security of the cold wallet using one-way communication technology.

### SUMMARY OF THE INVENTION

The purpose of the present invention is to provide a private key security management method of a cold wallet and a cold wallet server, in order to enhance the reliability and security of the cold wallet.

To achieve the purpose, the present invention provides the following technical solutions:
A private key security management method of a cold wallet involving a cold wallet server isolated from an external network, comprising the steps of: the cold wallet server first generating a private key and a wallet address according to a mnemonic phrase, and then a system performing key splitting the private key into two or more key shares based on a preset private key sharing algorithm, and storing the key shares in volatile memories at different storage addresses within the cold wallet server;
while signing, the cold wallet server reading the key shares from the corresponding storage addresses of the volatile memories and merging to obtain the complete private key for signing, and deleting the private key thereafter.

Furthermore, the storage addresses for the key shares have a mapping relationship with the wallet address generated by performing an encryption operation on the wallet address.

Furthermore, the said cryptographic operation comprises performing a hash algorithm operation on the wallet address two or more times to obtain a hash value, and then establishing an index with the storage address of the key share using the hash value.

Furthermore, the said private key sharing algorithm comprises obtaining multiple key shares corresponding to the number of slices by performing a reversible operation on the private key according to the number of slices; while signing, the complete private key is obtained by performing the inverse operation the private key sharing algorithm on the key shares.

Furthermore, the said cold wallet server stores whitelist addresses; when a transaction is transmitted to the cold wallet server, the cold wallet server verifies the wallet address against the whitelist addresses; if the whitelist address are met, the key shares are read from the volatile memory at the storage addresses corresponding to the wallet address, and merged to obtain the complete private key for performing the signing.

A cold wallet server for the private key security management method of the cold wallet, comprising:
at least one wallet server, a wallet database, and intranet terminal equipment;
wherein the volatile memory is a memory device disposed within the wallet server or the wallet database;
the cold wallet server is arranged to generate a key based on the mnemonic phrase provided by a user and to divide the private key into key shares, and to store the different key shares in memory devices at different storage addresses;
wherein, for signing, the cold wallet server is arranged to read the key shares from the memory device at the corresponding storage addresses, to merge the key shares to obtain a complete private key for signing, and then to delete the key;
and wherein, upon power loss to the memory device disposed within the wallet server or the wallet database, the memory device is arranged to lose all key shards due to the power loss.

Furthermore, the said cold wallet server is connected to an external network through a one-way gateway communication system; the one-way gateway communication system located on the cold wallet server side is equipped with an internal network interface machine arranged to process and separate incoming and uploaded data; and the one-way gateway communication system located on the external network side is equipped with an external network interface machine arranged to separate incoming and uploaded data; the said one-way gateway communication system includes a one-way incoming optical gate devices arranged to unidirectionally transmit external network data to the cold wallet server, and a one-way uploading optical gate devices arranged to unidirectionally upload cold wallet server data to the external network.

Furthermore, the said one-way incoming optical gate device and the one-way uploading optical gate device sequentially include an optical gate front-end machine, a one-way optical gate, and an optical gate back-end machine arranged according to the data transmission direction.

Furthermore, the upstream connection of the said external network interface machine is connected to the external network firewall and then connected to the external network.

Furthermore, an internal network firewall is provided between the said internal network interface machine and the cold wallet server.

Compared to existing technologies, the beneficial effects of the present invention are as follows:
When a user logs into the cold wallet server, the private key and wallet address are generated through the mnemonic phrase provided by the user. The system then stores the key shares in volatile memory at different storage addresses, such as RAM. Even if the cold wallet server is invaded, leading to the leakage of memory data, it will not result in the leakage of the entire private key information. This means an intrusion can only obtain partial key shares and cannot piece together the complete private key to control the cold wallet assets, greatly reducing the risk of the complete private key leakage caused by local security issues. Furthermore, if the cold wallet server detects an illegal intrusion, it will initiate measures such as system restart or power-off protection. Once the system restarts or powers off, the key share data stored in memory will also disappear, thereby further enhancing the security and reliability of key protection.

### BRIEF DESCRIPTION OF THE DRAWINGS

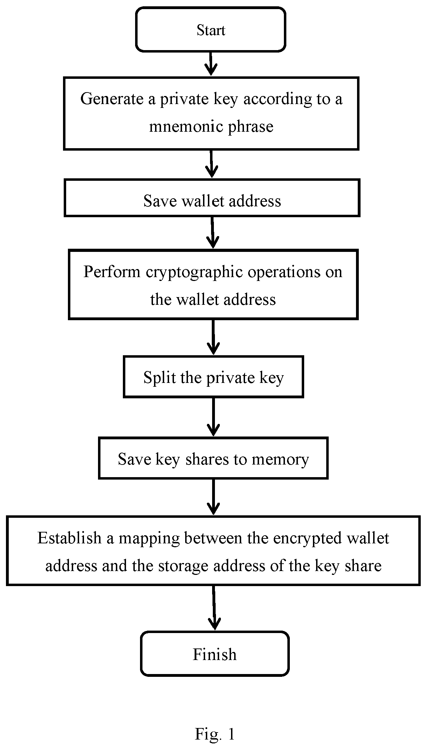

Fig. 1 is a flowchart of the cold wallet server generating key shares of the present invention.

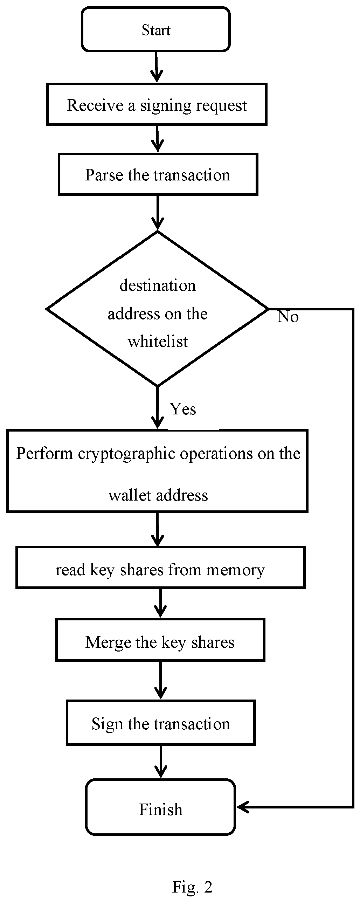

Fig. 2 is a flowchart of the cold wallet server performing transaction signing of the present invention.

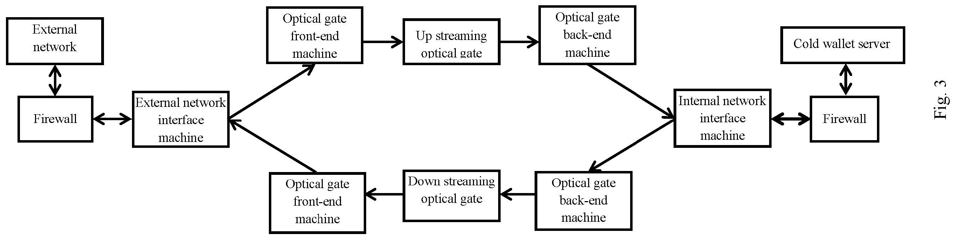

Fig. 3 is a schematic diagram of the system structure of the cold wallet server of the present invention.

### DESCRIPTION OF THE EMBODIMENTS

To make the purpose, technical solution, and advantages of the present invention clearer, a further detailed description of the present invention is provided below in conjunction with the accompanying drawings and embodiments.

The cold wallet server system includes a cold wallet server, a wallet database set in the intranet and intranet terminal equipments used for operating the wallet server. The cold wallet server system is connected to the intranet interface machine after passing through a firewall, and then connected to the extranet interface machine through a one-way gateway communication system. The extranet interface machine is connected to the extranet through a firewall. Wherein, the one-way gateway communication system transmits request data from the extranet and return data from the intranet through different links, making it difficult for network attacks to inject malicious software or launch vulnerability attacks on the target system through conventional means. Specifically, the said one-way gateway communication system includes a one-way incoming optical gate device that unidirectionally transmit external network data to the cold wallet server, and a one-way uploading optical gate device that unidirectionally upload cold wallet server data to the external network. The extranet interface machine and the intranet interface machine are devices that split and integrate the request data and return data. the said one-way incoming optical gate device and the one-way uploading optical gate device sequentially include an optical gate front-end machine, a one-way optical gate, and an optical gate back-end machine arranged according to the data transmission direction.

When a user needs to conduct cryptocurrency transactions, the relevant requests are transmitted through the external network. These requests pass through the firewall, the external network interface machine, the one-way gateway communication system's optical gate front-end machine, and are unidirectionally transmitted to the optical gate back-end machine, and then passed by the internal network interface machine through the internal network firewall to the cold wallet server. The cold wallet server generates the private key and wallet address according to the mnemonic phrase provided in the user's request. The system then applies the preset private key sharing algorithm to split the private key into two or more key shares. These key shares are stored in different memory locations within the cold wallet server or the wallet database. They remain until the user initiates a signing request. If a user sends a signing request to the cold wallet server, the server retrieves the corresponding key shares from their respective memory locations and combines to reconstruct the complete private key. This private key is then used to sign the transaction. Once the transaction is completed or the user logs out of the cold wallet server, the relevant private key is deleted. Consequently, even if the cold wallet server is compromised and memory data is leaked, the entire private key information will not be exposed. An intrusion would only yield partial key shares, making it impossible to reconstruct the complete private key and control the cold wallet assets. This significantly reduces the risk of the complete private key leakage due to localized security breaches. Furthermore, if the cold wallet server detects an illegal intrusion, it will initiate system restart or power-off protection measures. Once the system restarts or loses power, the key shares data stored in the memory will also disappear, further enhancing the security and reliability of private key protection.

The storage addresses of the key shares obtained after the aforementioned key splitting also undergo cryptographic operations. Specifically, the wallet address is cryptographically processed to derive an encrypted storage address. This encrypted storage address forms a mapping table with the actual memory address of the key share. The specific cryptographic operation method employs a hashing algorithm, including MD5, salted MD5, SHA-1, SHA-256, SHA-512, etc. Taking MD5 as an example, the hash value obtained by performing multiple MD5 operations on the wallet address serves as the encrypted storage address.

Regarding the private key splitting, the system determines the number of key shares, ensuring it is less than the length of the private key. The private key is then splitted using reversible operations. When a signature is required, the key shares are combined into the complete private key through reverse operations for signing.

The operational methods can include: (1) Interval data extraction, such as extracting data based on odd or even bit positions; (2) Midpoint division, for example, splitting the private key at its midpoint, and then further splitting the resulting segments at their midpoints until the desired number of key shares is reached; (3) Consecutive extraction, sequentially extracting a segment of data along the length of the private key to serve as a key share. It is important to note that the above splitting methods are not exhaustive, and the system can employ one, multiple, or a combination of these methods as needed.

To further enhance the system's reliability and security, a whitelist verification mechanism has been incorporated into the cold wallet server. The cold wallet server stores a list of whitelisted addresses. When a transaction is transmitted to the cold wallet server, the server compares the destination wallet address with the addresses on the whitelist. Only if the destination address matches an address on the whitelist will the server proceed to retrieve the key shares from the memory locations associated with that wallet address, combine them to obtain the complete private key, and then perform the signing operation.

The above description details specific implementations of this application. However, the scope of protection for this application is not limited to these examples. Any variations or substitutions readily conceivable by those skilled in the art within the technical scope disclosed by this application should be encompassed within its protective scope. Therefore, the scope of protection for this application shall be determined by the scope of the claims.

## Claims

1. A private key security management method of a cold wallet involving a cold wallet server isolated from an external network, comprising the steps of:
the cold wallet server first generating a private key and a wallet address according to a mnemonic phrase, and then a system performing key splitting the private key into two or
more key shares based on a preset private key sharing algorithm, and storing the key shares in volatile memories at different storage addresses within the cold wallet server;
while signing, the cold wallet server reading the key shares from the corresponding storage addresses of the volatile memories and merging to obtain the complete private key for signing, and deleting the private key thereafter.

2. The private key security management method of a cold wallet of claim 1, wherein the storage addresses for the key shares have a mapping relationship with the wallet address generated by performing an encryption operation on the wallet address.

3. The private key security management method of a cold wallet of claim 2, wherein the said cryptographic operation comprises performing a hash algorithm operation on the wallet address two or more times to obtain a hash value, and then establishing an index with the storage address of the key share using the hash value.

4. The private key security management method of a cold wallet of claim 1, wherein the said private key sharing algorithm comprises obtaining multiple key shares corresponding to the number of slices by performing a reversible operation on the private key according to the number of slices; while signing, the complete private key is obtained by performing the inverse operation the private key sharing algorithm on the key shares.

5. The private key security management method of a cold wallet of claim 1, wherein the said cold wallet server stores whitelist addresses; when a transaction is transmitted to the cold wallet server, the cold wallet server verifies the wallet address against the whitelist addresses; if the whitelist address are met, the key shares are read from the volatile memory at the storage addresses corresponding to the wallet address, and merged to obtain the complete private key for performing the signing.

6. A cold wallet server for the private key security management method of the cold wallet of claim 1, comprising:
at least one wallet server, a wallet database, and intranet terminal equipment;
wherein the volatile memory is a memory device disposed within the wallet server or the wallet database;
the cold wallet server is arranged to generate a key based on the mnemonic phrase provided by a user and to divide the private key into key shares, and to store the different key shares in memory devices at different storage addresses;
wherein, for signing, the cold wallet server is arranged to read the key shares from the memory device at the corresponding storage addresses, to merge the key shares to obtain a complete private key for signing, and then to delete the key;
and wherein, upon power loss to the memory device disposed within the wallet server or the wallet database, the memory device is arranged to lose all key shards due to the power loss.

7. The cold wallet server of claim 6, wherein the said cold wallet server is connected to an external network through a one-way gateway communication system; the one-way gateway communication system located on the cold wallet server side is equipped with an internal network interface machine arranged to process and separate incoming and uploaded data; and the one-way gateway communication system located on the external network side is equipped with an external network interface machine arranged to separate incoming and uploaded data; the said one-way gateway communication system includes a one-way incoming optical gate devices arranged to unidirectionally transmit external network data to the cold wallet server, and a one-way uploading optical gate devices arranged to unidirectionally upload cold wallet server data to the external network.

8. The cold wallet server of claim 7, wherein the said one-way incoming optical gate device and the one-way uploading optical gate device sequentially include an optical gate front-end machine, a one-way optical gate, and an optical gate back-end machine arranged according to the data transmission direction.

9. The cold wallet server of claim 7, wherein the upstream connection of the said external network interface machine is connected to the external network firewall and then connected to the external network.

10. The cold wallet server of claim 7, wherein an internal network firewall is provided between the said internal network interface machine and the cold wallet server.
